Europäisches Patentamt

European Patent Office

Office européen des brevets

(11) Numéro de publication: **0 318 347**
**A1**

## (12) DEMANDE DE BREVET EUROPEEN

(21) Numéro de dépôt: **88402763.2**

(22) Date de dépôt: **03.11.88**

(51) Int. Cl.⁴: **B 26 D 7/06**
**F 16 P 3/02**

(30) Priorité: **10.11.87 FR 8715581**

(43) Date de publication de la demande:
**31.05.89 Bulletin 89/22**

(84) Etats contractants désignés: **DE ES FR IT SE**

(71) Demandeur: **DITO-SAMA**
**39 rue de Beauze**
**F-23200 Aubusson Creuse (FR)**

(72) Inventeur: **Musseau, Joel**
**Passage Sarrazin**
**F-23200 Aubusson (FR)**

**Lallier, Christian**
**Saint Cloud Blessac**
**F-23200 Aubusson (FR)**

(74) Mandataire: **Moncheny, Michel et al**
**c/o Cabinet Lavoix 2 Place d'Estienne d'Orves**
**F-75441 Paris Cedex 09 (FR)**

(54) **Machine de coupe de produits, notamment de légumes, de forme allongée.**

(57) Cette machine de coupe de produits, notamment de légumes, de forme allongée, du type comprenant des moyens de coupe (2) des produits au-dessus desquels est disposée une trémie d'alimentation (1), dans la trémie est disposé un barillet de chargement de produits (3), délimitant des compartiments axiaux (3a, 3b) de réception des produits, déplaçables par rotation du barillet, entre une position de chargement (A) et une position de coupe (8) dans laquelle la partie inférieure d'au moins un compartiment communique avec les moyens de coupe (2), la partie supérieure de ce compartiment étant obturée par une plaque de dessus (6) de la trémie, à travers laquelle s'étendent des moyens presseurs (7) pour solliciter les produits contre les moyens de coupe (2) et en ce qu'un écran de sécurité (8) est prévu pour obturer l'ouverture de chargement (4) de produits, lors de la rotation du barillet et lorsque les moyens presseurs sont en position de repos.

FIG.2

## Description

## Machine de coupe de produits, notamment de légumes, de forme allongée.

La présente invention concerne une machine de coupe de produits, notamment de légumes, de forme allongée.

On connait déjà dans l'état de la technique un certain nombre de machines de coupe.

Ainsi par exemple, on connait des machines du type comportant un bâti au-dessus duquel est disposée une trémie d'alimentation, des moyens de coupe étant prévus dans le bâti. Les produits à couper peuvent être introduits dans la trémie, soit un par un, soit en vrac et des moyens presseurs peuvent par exemple être prévus pour solliciter les produits contre les moyens de coupe.

Cependant, tous les dispositifs connus présentent un certain nombre d'inconvénients notamment au niveau du compromis structure/rapidité de fonctionnement/sécurité. En effet, ces machines de coupe sont équipées de moyens de coupe extrêmement efficaces et afin d'éviter les accidents, il est nécessaire de prendre un certain nombre de mesures de sécurité. Ces mesures de sécurité peuvent se présenter sous différents aspects et peuvent par exemple comprendre des moyens de détection de la présence des mains de l'utilisateur dans des endroits sensibles de la machine ou également des obstacles empêchant l'utilisateur d'introduire par exemple ses mains dans ces endroits.

Cependant, on aboutit à des machines qui si elles présentent un niveau de sécurité suffisant, ont une structure extrêmement complexe et un rendement très faible dû par exemple au fait que les opérations de chargement et les opérations de coupe sont effectuées les unes après les autres.

Par ailleurs, en simplifiant la structure de la machine, on aboutit bien souvent à un degré de sécurité insuffisant.

Le but de l'invention est donc de résoudre ces problèmes en proposant une machine de coupe qui présente un degré de sécurité très élevé pour les utilisateurs, tout en ayant une structure simple et permettant de travailler rapidement.

A cet effet, l'invention a pour objet une machine de coupe de produits, notamment de légumes, de forme allongée, du type comportant des moyens de coupe, au-dessus desquels est disposée une trémie d'alimentation, caractérisée en ce que dans la trémie est disposée un barillet de chargement de produits, délimitant des compartiments axiaux de réception des produits, déplaçables par rotation du barillet, entre une position de chargement dans laquelle la partie supérieure d'au moins un compartiment est en regard d'une ouverture de chargement de la trémie, la partie inférieure de celui-ci étant obturée par une plaque de fond de la trémie, de sorte que les produits sont en appui contre cette plaque, et une position de coupe dans laquelle la partie inférieure d'au moins un compartiment communique avec les moyens de coupe, la partie supérieure de ce compartiment étant obturée par une plaque de dessus de la trémie, à travers laquelle s'étendent des moyens presseurs pour solliciter les produits contre les moyens de coupe, et en ce qu'un écran de sécurité est prévu pour obturer l'ouverture de chargement de produits lors de la rotation du barillet.

Avantageusement, la machine selon l'invention comporte des moyens de remontée des moyens presseurs en position haute, dans laquelle ces moyens sont dégagés des compartiments du barillet pour permettre la rotation de celui-ci, ces moyens de remontée étant reliés à des moyens de déplacement de l'écran de sécurité pour déplacer celui-ci entre une position escamotée et une position d'obturation de l'ouverture de chargement lorsque les moyens presseurs sont en position haute.

L'invention sera mieux comprise à l'aide de la description qui va suivre, donnée uniquement à titre d'exemple et faite en se référant aux dessins annexés, sur lesquels :

- la Fig. 1 représente une vue en perspective d'une machine selon l'invention, les moyens presseurs étant représentés en position haute et l'écran de sécurité en position d'obturation de l'ouverture de chargement de produits ;

- la Fig. 2 représente une vue de côté partiellement en coupe d'une machine selon l'invention illustrant une phase de fonctionnement de celle-ci ;

- la Fig. 3 représente une vue de côté d'une machine selon l'invention dans une autre phase de fonctionnement ; et

- la Fig. 4 représente une vue en perspective d'une variante de machine selon l'invention.

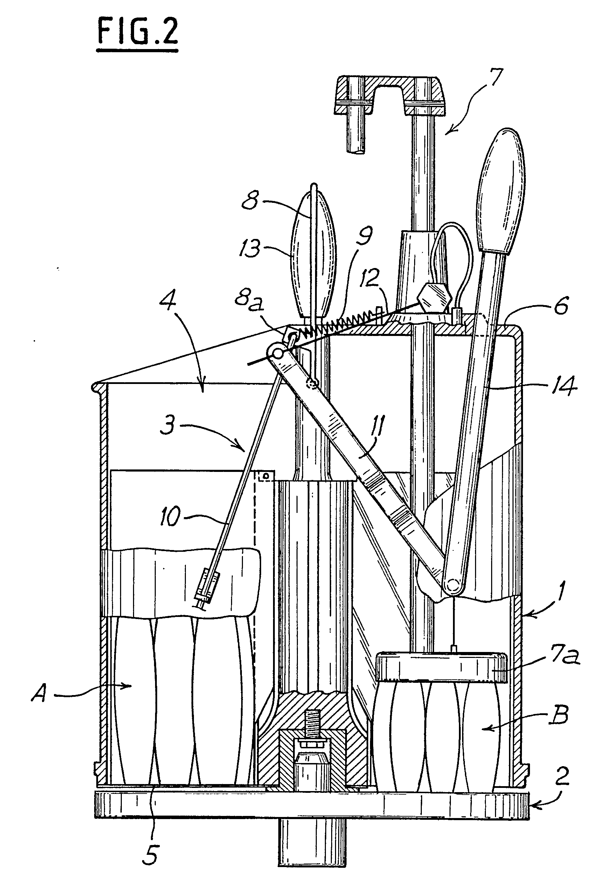

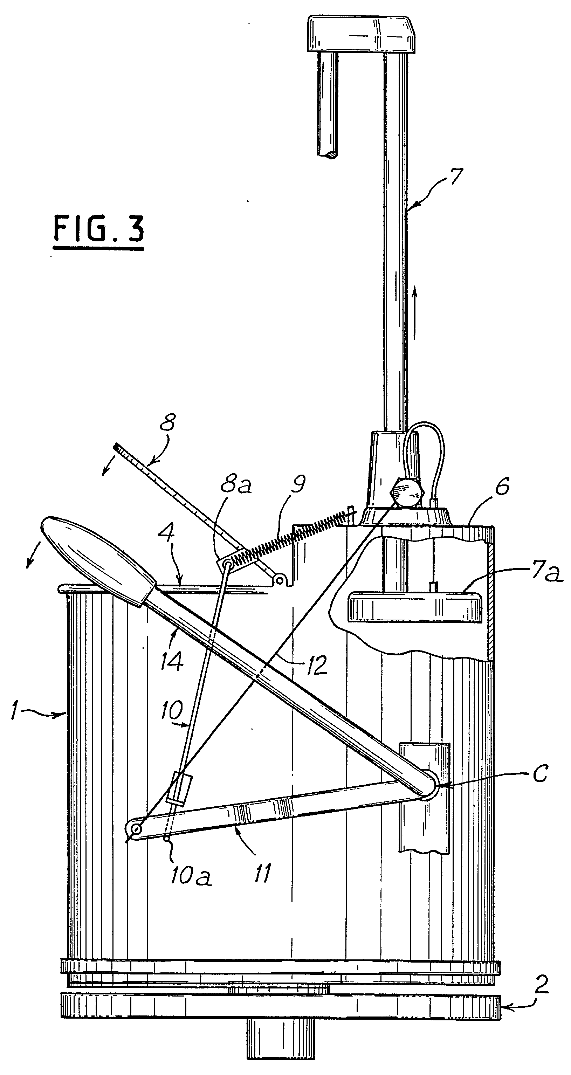

Ainsi qu'on peut le voir sur ces figures, une machine de coupe de produits, tels que par exemple des légumes, de forme allongée, comporte une trémie d'alimentation 1 disposée au dessus de moyens de coupe 2 schématisés par un plateau de coupe sur les Fig. 2 et 3.

Dans la trémie est disposé un barillet 3 de chargement des produits, délimitant des compartiments axiaux de réception des produits, par exemple 3a, 3b, ces compartiments étant déplaçables, par rotation du barillet, entre une position de chargement référencée par la lettre A sur la Fig. 2 dans laquelle la partie supérieure d'au moins un compartiment est en regard d'une ouverture de chargement 4 de la trémie, la partie inférieure de ce compartiment étant obturée par une plaque de fond 5 de la trémie, de sorte que les produits sont en appui contre cette plaque de fond, et une position de coupe référencée par B sur cette Fig. 2, dans laquelle la partie inférieure d'au moins un compartiment communique avec les moyens de coupe 2, la partie supérieure de ce compartiment étant obturée par une plaque de dessus 6 le la trémie.

Des moyens presseurs 7, qui seront décrits plus en détail par la suite, s'étendent à travers la plaque de dessus 6 de la trémie et sont adaptés pour solliciter les produits disposés dans les compartiments contre les moyens de coupe.

Un écran de sécurité 8 est prévu pour obturer l'ouverture de chargement des produits lors de la rotation du barillet afin d'empêcher l'utilisateur d'introduire ses mains à l'intérieur de la machine lors de cette rotation.

On conçoit que la structure de cette machine présente un degré de sécurité extrêmement élevé dans la mesure où l'utilisateur n'a accès à aucun élément interne de la machine lors de son fonctionnement et en particulier lors de la rotation du barillet.

En effet, comme cela sera décrit plus en détail par la suite, lors de la rotation du barillet, l'écran de sécurité 8 obture l'ouverture de chargement de la trémie et lors du chargement des produits, les cloisons du barillet délimitant les compartiments de celui-ci empêchent l'utilisateur d'avoir accès aux moyens de coupe.

Comme on l'a représenté sur les figures, l'écran 8 comporte par exemple une patte latérale 8a sur laquelle sont fixées d'une part une extrémité d'un ressort 9 dont l'autre extrémité est fixée sur la plaque de dessus 6 de la trémie pour solliciter cet écran en position escamotée, et une extrémité d'une tirette 10 de manoeuvre de l'écran 8 dont l'autre extrémité comporte une surface de butée 10a, constituée par exemple par une portion coudée de la tirette, adaptée pour coopérer avec un levier de manoeuvre 11 également relié par l'intermédiaire d'un câble 12, traversant la plaque de dessus 6 de la trémie, aux moyens presseurs 7 et plus particulièrement à des secteurs de poussée 7a de ceux-ci.

Le barillet 3 est quant à lui monté déplaçable en rotation par l'intermédiaire d'une manivelle 13 elle-même déplaçable par l'utilisateur entre deux positions, déterminés par exemple par les encoches 6a,6b de la plaque de dessus 6 de la trémie, pour déplacer les compartiments du barillet entre leurs deux positions dans un mouvement d'aller et de retour.

Le levier 11 est monté déplaçable par l'intermédiaire d'une tige de manoeuvre 14 articulée avec le levier 11 sur la machine, par exemple en C.

Le fonctionnement de la machine selon l'invention va maintenant être décrit.

La position de départ de la machine est celle représentée sur la partie gauche de la Fig.2 dans laquelle l'écran de sécurité 8 est en position escamotée, de sorte que l'utilisateur peut avoir accès à l'intérieur de la trémie pour disposer des produits dans les compartiments du barillet.

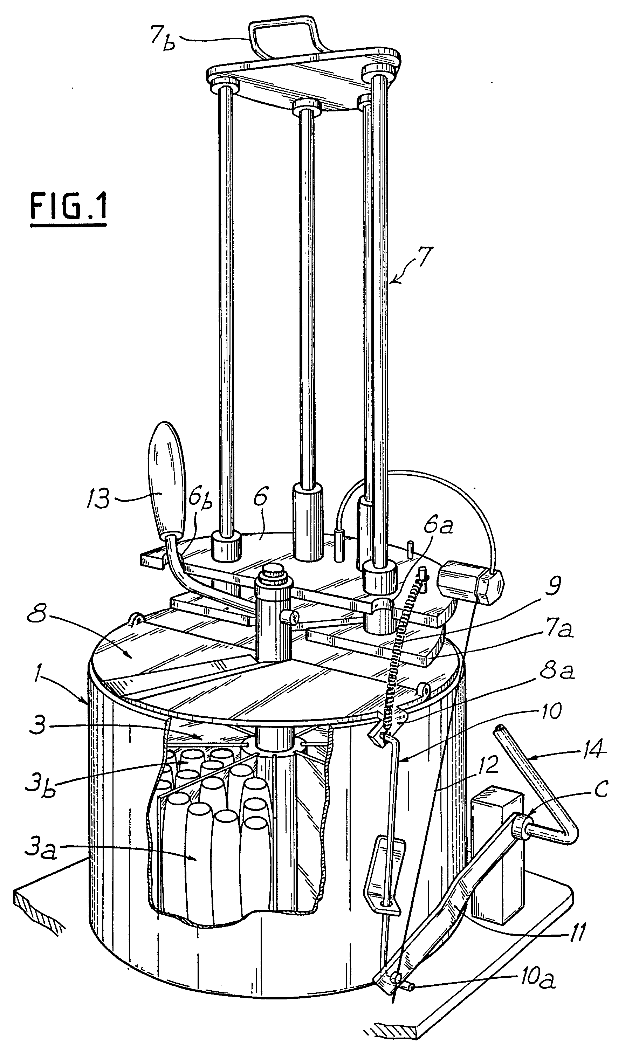

Une fois le chargement terminé, l'utilisateur actionne vers le bas la tige de manoeuvre 14, comme on peut le voir sur la Fig.3, ce qui a pour effet d'une part de remonter les moyens presseurs 7 par l'intermédiaire du levier 11 et du câble 12 fixé par exemple sur les secteurs de poussée 7a de ces moyens presseurs, et d'autre part d'abaisser l'écran de sécurité 8 de sa position escamotée vers sa position d'obturation de l'ouverture 4 de la trémie par l'intermédiaire du levier 11, de la surface de butée 10a et de la tirette de manoeuvre 10, à l'encontre de la sollicitation élastique du ressort 9. On arrive alors dans la position représentée sur la Fig.1, dans laquelle l'écran 8 obture totalement l'ouverture de chargement de la trémie et les moyens presseurs sont en position haute et sont totalement dégagés des compartiments du barillet de sorte que l'utilisateur peut tourner cluі-ci et donc déplacer les compartiments de barillet, en positionnant la manivelle 13 dans la position opposée à celle représentée sur cette figure.

Pendant cette manoeuvre, l'utilisateur maintient la tige de manoeuvre 14 abaissée de manière à maintenir les moyens presseurs en position haute et d'écran en position d'obturation.

Lorsque le barillet a effectué un demi-tour, les compartiments chargés de produits se retrouvent dans la position de coupe illustrée par B sur la Fig.2, dans laquelle les produits sont en regard des moyens de coupe 2. L'utilisateur relâche alors la tige de manoeuvre 14 qui, par exemple en raison du poids des moyens presseurs 7, remonte, entraînant un relâchement progressif de la tirette de manoeuvre 10 de l'écran de sécurité et une descente progressive des secteurs des moyens presseurs dans les compartiments du barillet.

Le remontée de la tige de manoeuvre 14 entraînant une remontée du levier 11 et donc un relâchement de la tirette de manoeuvre 10, l'écran de sécurité se déplace vers sa position escamotée, position qu'il atteint avant que les moyens presseurs aient terminé leur descente. L'utilisateur peut alors introduire de nouveaux produits dans les compartiments qui sont en regard de l'ouverture de chargement, pendant la poursuite de la descente des moyens presseurs et donc la poursuite de la coupe des produits. Le cycle, tel qu'il vient d'être décrit peut alors être répété, en déplaçant la manivelle 13 vers la position représentée sur la Fig.1, après avoir remonté les moyens presseurs et donc abaissé l'écran de sécurité.

Les moyens de coupe peuvent être constitués par des moyens autres qu'un plateau de coupe, et le poids des moyens presseurs peut être adapté aux produits à couper, pour obtenir une pression appropriée sur ceux-ci, cette pression assurant un bon travail des produits sans les détériorer. Cette pression peut être assurée en partie par l'utilisateur par l'intermédiaire de la poignée 7b (Fig. 1) prévue sur les moyens presseurs.

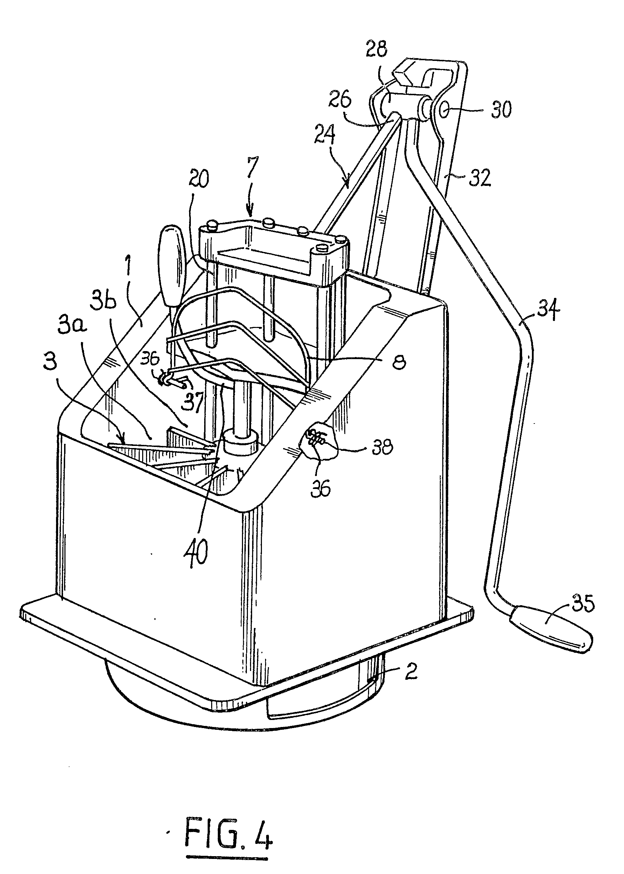

Selon une variante de réalisation de l'invention représentée à la Fig. 4, la machine comprend un barillet 3 de chargement des produits, une trémie d'alimentation 1 ainsi que des moyens de coupe 2. De même les compartiments axiaux de réception des produits 3a, 3b sont déplaçables entre deux positions A et B.

L'agencement des moyens presseurs 7, de l'écran de sécurité 8 et les moyens de remontée des moyens presseurs sont modifiés.

Ainsi les moyens presseurs sont articulés par l'extrémité d'au moins une des tiges de manoeuvre 20 à une extrémité 22 d'un premier bras 24 dont l'autre extrémité 26 est solidaire d'un manchon 28 pivotant autour de son axe longitudinal orienté perpendiculairement au plan vertical dans lequel se déplace le bras 24. Ce manchon est monté pivotant autour d'un fourreau 30 solidaire de l'extrémité d'un second bras 32 dont l'autre extrémité est articulée sur la trémie d'alimentation 1.

Un levier de manoeuvre 34 muni à une extrémité d'une poignée de manoeuvre 35 est solidaire du manchon 28 par son autre extrémité, de façon que le déplacement de ce levier s'effectue dans un plan parallèle au plan dans lequel se déplace le bras 24.

Parallèlement, l'écran de sécurité 8, qui peut être une grille, est muni à l'arrière de son axe de pivotement de deux ergots 37 qui, en position d'ouverture de l'écran, font saillie dans le volume au sein duquel les moyens presseurs peuvent être déplacés, lorsque ceux-ci sont en position basse.

De plus des éléments élastiques 36 du type ressort sont disposés autour des pions de rotation 38 de l'écran. Ces éléments élastiques sont fixés par une extrémité à ces pivots et par l'autre à la trémie de façon que l'écran soit rappelé en position d'ouverture des compartiments c'est à dire en position haute lorsque les moyens presseurs sont en position basse.

Par ailleurs, un second moyen d'abaissement de l'écran comprend uniquement la manivelle 13 de déplacement en rotation du barillet. En effet, cette manivelle par sa forme propre ainsi que cela est représenté sur la Fig. 4 prend appui lors de sa rotation sur l'écran et plus particulièrement sur sa périphérie ce qui conduit à l'abaissement de cet écran durant la rotation de cette manivelle, au moyen de la partie horizontale 40 de celle-ci.

Le fonctionnement d'une telle variante reste identique à celui précédemment décrit, et les résultats obtenus avec des moyens différents sont identiques à l'exception des moyens presseurs. Ceux-ci en effet, ne descendent plus seulement par leur propre poids puisque l'utilisateur peut exercer une pression supplémentaire au moyen du levier de manoeuvre. Cet avantage présente un intérêt lors de la découpe de certains produits durs pour lesquels il faut maintenir une pression de contact importante entre les produits et les outils de coupe. Cet effet est obtenu sans modification du poids des moyens presseurs et sans utiliser la deuxième main de l'utilisateur pour exercer une pression à l'aide de la poignée 7b (Fig. 1).

Le barillet peut ne comporter que deux compartiments dont l'un est en position de chargement et l'autre en position de coupe et les moyens d'actionnement des différents organes décrits peuvent également être constitués par des moyens automatiques actionnés par exemple par vérin ou autre, sous la commande par exemple d'un automate.

Le barillet comporte au moins deux cloisons inamovibles délimitant deux compartiments symétriques, ces cloisons empêchant l'utilisateur d'accéder aux moyens de coupe lors du chargement. Il va de soi que le barillet peut comporter un nombre supérieur de compartiments, les cloisons délimitant ces compartiments supplémentaires pouvant être amovibles.

**Revendications**

1. Machine de coupe de produits, notamment de légumes, de forme allongée, du type comprenant des moyens de coupe (2) des produits au-dessus desquels est disposée une trémie d'alimentation (1), caractérisée en ce que dans la trémie est disposé un barillet de chargement de produits (3), délimitant des compartiments axiaux (3a, 3b) de réception des produits, déplaçables par rotation du barillet, entre une position de chargement (A) dans laquelle la partie supérieure d'au moins un compartiment est en regard d'une ouverture de chargement (4) de la trémie, la partie inférieure de celui-ci étant obturée par une plaque de fond (5) de la trémie, de sorte que les produits sont en appui contre cette plaque, et une position de coupe (B) dans laquelle la partie inférieure d'au moins un compartiment communique avec les moyens de coupe (2), la partie supérieure de ce compartiment étant obturée par une plaque de dessus (6) de la trémie, à travers laquelle s'étendent des moyens presseurs (7) pour solliciter les produits contre les moyens de coupe (2) et en ce qu'un écran de sécurité (8) est prévu pour obturer l'ouverture de chargement (4) de produits, lors de la rotation du barillet.

2. Machine selon la revendication 1, caractérisée en ce qu'elle comporte des moyens (14,11, 12;24 28, 32, 34) de remontée des moyens presseurs (7) en position haute, dans laquelle ces moyens sont dégagés des compartiments (3a, 3b) pour permettre la rotation du barillet (3), ces moyens de remontée étant reliés à des moyens (10a, 10, 8a ; 37,40) de déplacement de l'écran de sécurité (8) pour déplacer celui-ci entre une position escamotée et une position d'obturation de l'ouverture de chargement (4) lorsque les moyens presseurs sont en position haute.

3. Machine selon la revendication 2 caractérisée en ce que les moyens de remontée des moyens presseurs comportent un levier (11) relié à une tige de manoeuvre (14), articulé sur la machine et relié aux moyens presseurs (7a, 7) par l'intermédiaire d'un câble (12), le levier étant adapté pour coopérer avec une surface de butée (10a) d'une tirette de déplacement (10) de l'écran pour déplacer celui-ci vers sa position d'obturation de l'ouverture de chargement lors de la remontée des moyens presseurs.

4. Machine selon la revendication 2 caracrisée en ce que les moyens de déplacement de l'écran de sécurité (8) sont des ergots (37) solidaires de cet écran qui font saillie dans le volume dans lequel se déplace les moyens presseurs (7), lorsque ceux-ci sont en position basse.

5. Machine selon l'une quelconque des revendications précédentes, caractérisée en ce que les compartiments (3a, 3b) du barillet (3) sont montés déplaçables entre les deux positions (A,B) par l'intermédiaire d'une manivelle (13).

6. Machine selon la revendication 2 ou 5 caractérisée en ce que les moyens de déplacement de d'écran de sécurité (8) comprennent la manivelle (13) dont la partie horizontale (40) coopère avec la périphérie de l'écran de façon à déplacer celui-ci vers sa position d'obturation de l'ouverture de chargement lorsque la manivelle est actionnée en rotation.

7. Machine selon l'une quelconque des revendications précédentes caractérisée en ce que des moyens élastiques (9, 36) sont prévus pous solliciter l'écran de sécurité en position escamotée.

8. Machine selon l'une quelconque des revendications 4 à 7 caractérisée en ce que les moyens de remontée des moyens presseurs (7) comprennent un premier bras (24) articulé d'une part sur ces moyens presseurs et d'autre part solidaire d'un manchon (28) pivotant dans un fourreau (30) solidaire d'un second bras (32) articulé sur la trémie d'alimentation (1) et un levier de manoeuvre (34) du manchon solidaire du manchon (28).

9. Machine selon l'une quelconque des revendications précédentes, caractérisée en ce que le barillet (3) comporte au moins deux cloisons inamovibles délimitant deux compartiments symétriques.

FIG.1

EP 0 318 347 A1

# FIG.2

# FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-B-1 507 999 (REIFENHÄUSER)<br>* Colonne 1, lignes 37-68; colonne 3, lignes 1-34; figures 1-3 *<br>--- | 1,6 | B 26 D 7/06<br>F 16 P 3/02 |
| A | DE-C- 677 027 (HEIKE)<br>--- | | |
| A | DE-A-2 925 834 (REIFENHÄUSER)<br>--- | | |
| A | DE-A-3 113 638 (SCHARSIG)<br>------ | | |

**DOMAINES TECHNIQUES RECHERCHES (Int. Cl.4)**

B 26 D
A 47 J
F 16 P

**Le présent rapport a été établi pour toutes les revendications**

| Lieu de la recherche | Date d'achèvement de la recherche | Examinateur |
|---|---|---|
| LA HAYE | 06-03-1989 | BERGHMANS H.F. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant